# EUROPEAN PATENT APPLICATION

(11) **EP 1 994 985 A1**
(43) Date of publication of application: **26.11.2008**
(21) Application number: 07737592.1
(22) Date of filing: 01.03.2007
(51) Int. Cl.: B01J 35/02, B01D 53/86, B01J 23/10, B01J 23/18, B01J 23/22, B01J 23/72, B01J 23/745, B01J 23/83, B01J 23/89

(54) **PHOTOCATALYST ACTIVATION SYSTEM AND METHOD FOR ACTIVATING PHOTOCATALYST**

(30) Priority: 01.03.2006 JP 2006054573; 19.02.2007 JP 2007037614
(71) Applicant: Nissan Motor Company Limited, Kanagawa-ku Yokohama-shi Kanagawa 221-0023 (JP); The University of Tokyo, Bunkyo-ku, Tokyo 113-8654 (JP)
(72) Inventor: NIWA, Yusuke, Kanagawa 243-0123 (JP); MATSUSHITA, Kenjiro, Kanagawa 243-0123 (JP); MASUDA, Kouji, Kanagawa 243-0123 (JP); DOMEN, Kazunari, Tokyo 1138654 (JP); TERAMURA, Kentaro, Tokyo 1138654 (JP)
(74) Representative: Hager, Thomas Johannes
(86) International application number: PCT/JP2007/053912
(87) International publication number: WO 2007/100039

(57) **Abstract**

Disclosed is a photocatalyst activation system **characterized by** including (a) a catalyst which includes a photocatalytic material containing cerium oxide, or a catalyst which includes a photocatalytic material containing at least one oxide selected from the group consisting of transition metal oxides other than cerium oxide; (b) a light source which irradiates the catalyst with light; and (c) a heat transfer device which transfers heat to the catalyst. By this photocatalyst activation system, it is possible to widen a usable wavelength range of light, and to enhance the catalytic activity to a large extent.

## Description

### TECHNICAL FIELD

The present invention relates to a photocatalyst activation system. More specifically, the present invention relates to a photocatalyst activation system that utilizes heat in activating a photocatalyst, and to a method for activating the photocatalyst.

### BACKGROUND ART

In recent years, a photocatalyst has attracted attention. When this photocatalyst absorbs light equal to or more than band gap energy, electrons in a valence band are excited to a conduction band, whereby holes are generated. It is conceived that the electrons and the holes move to a surface of the catalyst, whereby active species such as hydroxyl radicals and superoxide anions are generated.

These active species have extremely high oxidizing power, and can oxidize and decompose organic matter with ease. Such a photocatalytic function is utilized, whereby air purification, water purification, stainproofness, defogging, and the like, which use the photocatalyst, have been put into practical use (refer to Akira FUJISHIMA, Ceramics, 39, No. 7, 2004).

A photocatalytic reaction progresses by such a mechanism as described above if the photocatalyst can absorb the light, and accordingly, clean solar energy can be utilized. Hence, the photocatalyst is characterized in that it is not necessary to be supplied with external energy such as heat energy like a conventional catalytic reaction. However, the photocatalyst has a problem that it is difficult to obtain a sufficient reaction rate.

As a reason why the sufficient reaction rate cannot be obtained, it is mentioned that utilization efficiency of the solar light is low. At present, titanium oxide is used most owing to a price, chemical stability and the like thereof. However, the band gap energy of titanium oxide is as high as 3.2eV, and titanium oxide can absorb only the ultraviolet light. Incidentally, a content of the ultraviolet light in the solar light is no more than approximately 3%. Moreover, a fluorescent lamp used indoors converts the ultraviolet light into the visible light by a fluorescent substance. Furthermore, it is an actual situation that, also in a vehicle, only the visible light is utilizable since many pieces of glass that cuts such ultraviolet rays are employed.

As opposed to this, if the visible light of which content in the solar light is approximately 50% can be utilized, then a faster reaction rate can be obtained. For the utilization of the visible light, it is examined to reduce the band gap energy.

Energies of the conduction band and the valence band are dominated by orbits of metal and oxygen. Accordingly, either of the orbits just needs to be controlled in order to reduce the band gap energy. However, based on the conventional findings, it is known that a recombination center of the electron and the hole is generated in the case of controlling the orbit of the metal, and therefore, photocatalytic activity is decreased. Hence, it is necessary to allow an element in which the energy of the valence band is higher than in the oxygen to substitute for the metal.

A valence electron of a nitrogen atom has higher energy than a valence electron of an oxygen atom, and accordingly, there is a possibility that use of the nitrogen atom can reduce the band gap energy and the visible light can be utilized. Heretofore, there have been proposed titanium oxide doped with nitrogen by NOx treatment and ammonia treatment (refer to *"*Hikari-Shokubai towa nanika (What is photocatalyst?", Shinri SATO, Kodansha Ltd., 2004), and oxynitride materials (refer to Japanese Patent Unexamined Publications Nos. 2002-066333 and 2004-230306).

Meanwhile, a variety of researches/developments have been made in order to enhance the catalytic activity itself. In order to increase an adsorption amount of a reactant to a surface of the catalyst, the photocatalyst is combined with a porous substance, and in order that the electrons and the holes, which are generated by photoexcitation, can reach the catalyst surface without deactivation, crystallinity of the photocatalyst is enhanced, and powder thereof is microparticulated (refer to Japanese Patent Unexamined Publication No. 2001-259436). Moreover, in order to promote charge separation, metal is supported on the photocatalyst (refer to Japanese Patent Unexamined Publication No. H9-262473).

### DISCLOSURE OF INVENTION

However, in such conventional photocatalyst utilization technologies, examinations and evaluations have been performed therefor under a condition where the solar light is utilized, and perhaps therefore, reaction temperatures are mostly room temperature, and examinations on behaviors of the photocatalyst in other temperature ranges have not been seen. Accordingly, in the conventional photocatalyst utilization technologies, operating conditions and environments thereof are limited, and it has been hard to say that a range of uses thereof is necessarily wide.

Moreover, as a conventional technology, there has been proposed a technology for heating the photocatalyst up to 40 to 250°C in order to suppress caulking of hydrocarbon in the case of performing the photocatalytic reaction (refer to Japanese Patent Unexamined Publication No. 2004-89953). Furthermore, in Japanese Patent Unexamined Publication No. 2005-74392, there has been proposed a technology for heating and convecting hydrocarbon in gas in order to suppress diffusion-limited access between the photocatalyst and hydrocarbon, that is, a technology for heating the photocatalyst though indirectly. However, in these conventional technologies, detailed examinations have not been made for photocatalytic materials.

The present invention has been made in consideration for such problems inherent in the conventional technologies. It is an object of the present invention to provide a photocatalyst activation system, which have high practical utilities, are capable of widening a usable wavelength range of light, and are capable of enhancing the catalytic activity to a large extent, and to provide a method for activating the photocatalyst.

A photocatalyst activation system according to a first aspect of the present invention is characterized by including: a catalyst which includes a photocatalytic material containing cerium oxide; a light source which irradiates the catalyst with light; and a heat transfer device which transfers heat to the catalyst.

A photocatalyst activation system according to a second aspect of the present invention is characterized by including: a catalyst which includes a photocatalytic material containing at least one oxide selected from the group consisting of transition metal oxides other than cerium oxide; a light source which irradiates the catalyst with light; and a heat transfer device which transfers heat to the catalyst.

A method for activating a photocatalyst according to a third aspect of the present invention is characterized by including the step of: supplying light and heat to a photocatalyst which includes a photocatalytic material containing cerium oxide.

### BRIEF DESCRIPTION OF DRAWINGS

[fig. 1] FIG. 1 is a schematic view showing an embodiment of a photocatalyst activation system of the present invention.
[fig. 2] FIG. 2 is a schematic view showing another embodiment of the photocatalyst activation system of the present invention.
[fig. 3] FIG. 3 is a schematic view showing still another embodiment of the photocatalyst activation system of the present invention.
[fig. 4] FIG. 4 is a graph showing a temperature change of a butane conversion ratio in an example of the photocatalyst activation system of the present invention.

### BEST MODE FOR CARRYING OUT THE INVENTION

A description will be made below in detail of a photocatalyst activation system of the present invention. Note that, in this specification and claims, "%" added to values of concentrations, contents, loadings and the like represents a mass percentage unless otherwise specified.

As described above, a first photocatalyst activation system according to an embodiment of the present invention is a system including: a catalyst; a light source; and a heat transfer device (heat transferring means). The light source supplies light to the catalyst, and the heat transfer device plays a role to transfer heat to the catalyst. Moreover, the catalyst includes a photocatalytic material containing cerium oxide. With such a configuration, catalytic activity is enhanced even in a temperature range as low as approximately 50°C.

Note that, in the above-described catalyst, cerium oxide can be mixed or compounded with iron oxide and vanadium oxide. In this case, a usable wavelength range of light can be widened to the visible light range.

Here, the light source is sufficient if the light source can supply the catalyst with light that allows activation of the photocatalytic material for use. The light source just needs to be one that applies any one of the ultraviolet light (wavelength range: 1 nm to 400 nm), the visible light (wavelength range: 380 nm to 780 nm) and the infrared light (wavelength range: 760 nm to 1000 µm), or applies light in which these are mixed. Typically, if the light to be applied is light having a wavelength equal to or more than energy corresponding to a band gap of the photocatalytic material for use, then electrons of a valence band in the photocatalytic material are excited to a conduction band therein, and holes are generated in the valence band, and accordingly, a photocatalytic reaction can be progressed. Note that, in the case where this light source is capable of applying the infrared light, not only infrared rays but also heat is transferred to the photocatalytic material. Accordingly, in this photocatalyst system, it is possible to omit the heat transfer device to be described later.

The heat transfer device is not particularly limited as long as it can transfer the heat to the photocatalytic material for use. Moreover, a method of such heat transfer may be any of convection, radiation and heat conduction or an arbitrary combination thereof, and is not particularly limited. Specifically, a variety of heaters can be mentioned. However, the heat transfer device may be a lens (light condenser) capable of condensing the light (in particular, the visible light and the like) from the light source and heating the photocatalytic material. Note that, in this case, it is desirable to employ a configuration capable of condensing the light to the photocatalytic material with ease, in which either one or both of the lens and the light source are capable of being displaced.

A shape and properties of the heat transfer device are not particularly limited, either. Besides such a thing as an electric heater, fluid such as liquid and gas and other mediums can also be used as the heat transfer device as long as they can transfer the heat to the photocatalytic material. For example, as the heat transfer device, there can also be used: a material that generates heat of reaction by an exothermic reaction such as an oxidation-reduction reaction; thermal fluid such as thermal gas and thermal liquid; a variety of mediums which generate heat by vibrations and a resonance phenomenon; a variety of mediums which generate heat by being irradiated with light; and the like.

Note that, in the present invention, as such a heat transfer device, it is possible to apply exhaust heat from other engines and devices, for example, an internal combustion engine and a combustion engine. In particular, it is also possible to utilize exhaust heat from exhaust gas of an automobile, and exhaust heat from a boiler, a steel furnace or an incinerator. In this case, no problem occurs if such exhaust heat is in a pressurized atmosphere. Hence, the photocatalyst activation system of the present invention is usable for the engine of the automobile, the boiler, the steel furnace, and the incinerator.

As described above, the photocatalyst system of the present invention is a system that can utilize the heat from the variety of light sources and is rich in practical utilities.

Moreover, it is as described above that the infrared rays (infrared light) are usable as the heat transfer device. In this case, one light source in which an irradiation wavelength is variable may be used, or a different infrared light source that is not involved in the activation of the photocatalytic material may be installed and used. Note that the infrared light may be any of the far-infrared light (wavelength range: 25 µm to 1000 µm), the mid-infrared light (wavelength range: 2.5 µm to 25 µm), and the near-infrared light (wavelength range: 760 nm to 2.5 µm).

Next, a second photocatalyst activation system according to the embodiment of the present invention includes a light source and a heat transfer device, which are similar to those of the above-described first photocatalyst activation system. However, the second photocatalyst activation system is different from the first photocatalyst activation system in using one selected arbitrarily from transition metal oxides other than cerium oxide.

As such a transition metal oxide, there can be suitably used copper oxides (CuO, Cu₂O), iron oxide (Fe₂O₃), vanadium oxide (V₂O₅), bismuth oxide (Bi₂O₃), titanium oxide (TiO₂) or arbitrary mixtures thereof.

These materials are useful since the materials can be activated by the visible light if predetermined heat energy (ambient temperature) can be imparted thereto. In particular, iron oxide and vanadium oxide are capable of responding to the visible light, and can widen the usable wavelength range of light to the visible light range. Note that the temperature required for activating these photocatalytic materials is typically 50°C or more.

Moreover, the photocatalytic materials for use in the first and second photocatalyst activation systems of the present invention can further include transition metal compounds such as sulfides of the transition metals, nitrides of the transition metals, mixtures of these, or the like as long as these transition metal compounds exhibit the photocatalytic activity at the ordinary temperature. In such a way, the usable wavelength range of light can be widened to the visible light range.

In the present invention, the catalyst may be composed only of the photocatalytic material as described as above, which is contained as an essential material. However, besides this, a promoter, for example, platinum (Pt), rhodium (Rh), palladium (Pd), ruthenium (Ru), silver (Ag), gold (Au), nickel (Ni), cobalt (Co), copper (Cu), iridium (Ir), or arbitrary mixtures of these can be contained in the catalyst. In such a way, a function to suppress a recombination of the separated electrons and holes can be emerged, and the activity can be increased by promoting the reaction between a reactant and the separated e⁻ and h⁺.

Note that a heating temperature for the catalyst by the above-described heat transfer device is not particularly limited as long as it is sufficient for enhancing the activity of the above-described catalyst in comparison with the time of room temperature (25°C); however, is preferably 50 to 300°C, more preferably 100 to 300°C.

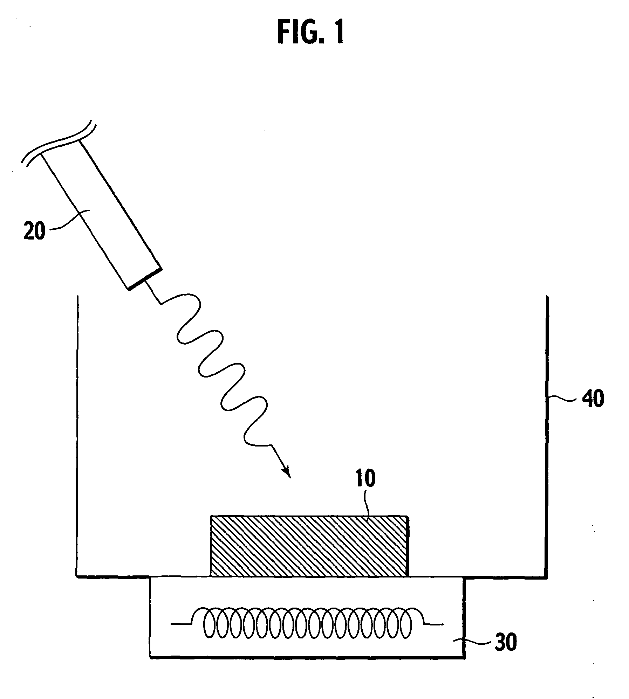

FIG. 1 is a configuration view showing an embodiment of the photocatalyst activation system of the present invention. In this drawing, the photocatalyst activation system includes: a catalyst 10; a light source 20; and an electric heater 30 as an example of the heat transfer device. Moreover, the catalyst 10 is housed in a reaction container 40 together with a treatment subject (not shown). A configuration is adopted, in which the reaction container 40 is mounted on the heater 30, and heat from the heater 30 is transferred to the catalyst 10 with ease.

In accordance with the system shown in FIG 1, the treatment subject is housed in the reaction container 40, and the catalyst 10 is activated, whereby various types of gas phase reactions and liquid phase reactions can be promoted. Specifically, by a similar system to that in FIG. 1, the exhaust gas can be purified, reactivity of an organic synthesis reaction can be enhanced, and so on.

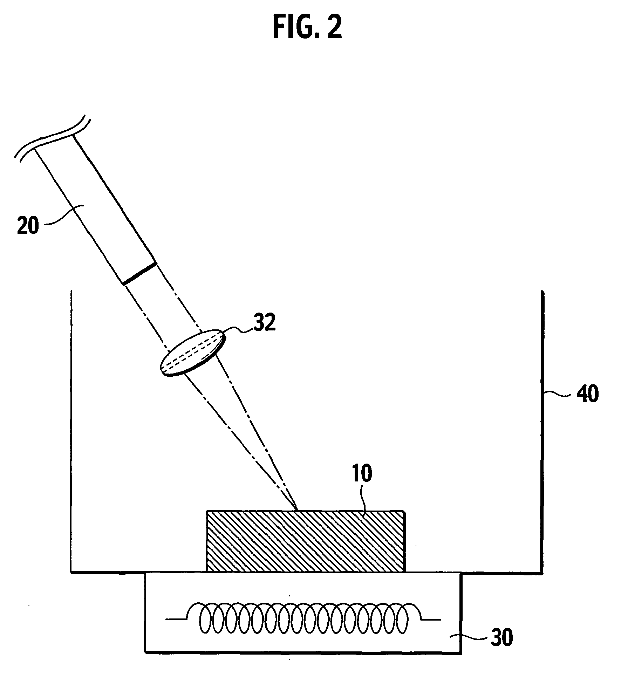

Moreover, in another embodiment of the photocatalyst activation system, which is shown in FIG. 2, as an example of the heat transfer device, a convex lens 32 is shown, which can condense the light (in particular, the visible light) from the light source and can supply the condensed light to the photocatalytic material. Furthermore, in this system, either one or both of the convex lens 32 and the light source 20 are capable of being displaced, thus making it possible to condense the light into the catalyst 10 with ease.

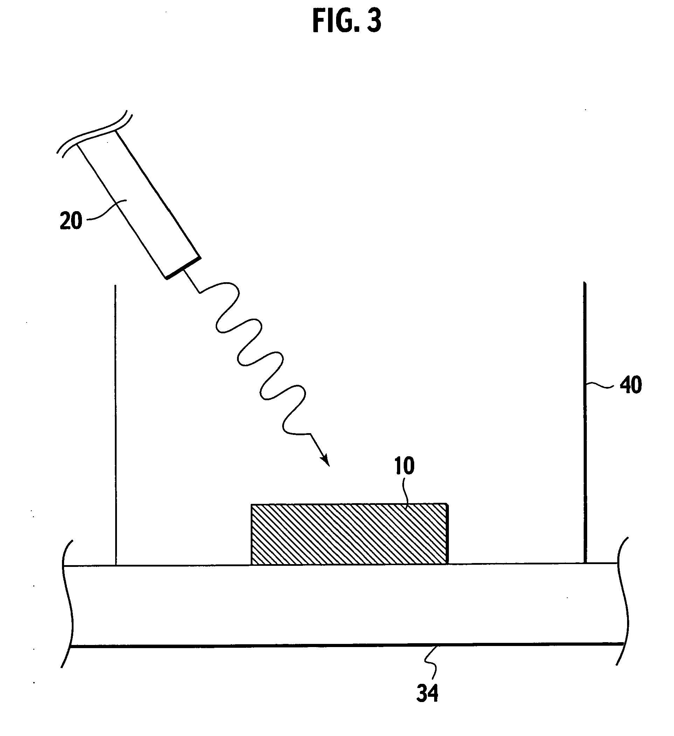

Furthermore, in still another embodiment of the photocatalyst activation system, which is shown in FIG. 3, as an example of the heat transfer device, an exhaust pipe 34 is shown, through which high-temperature exhaust gas flows. In this system, the above-described catalyst can be heated efficiently by heat transfer from the high-temperature exhaust gas discharged from an engine (not shown). Note that, in FIGS. 1 to 3, the reaction container 40 is not an essential component, and it is not necessary to provide the reaction container 40 if the treatment target can contact the catalyst 10.

A method for activating a photocatalyst according to the present invention can be performed by using the photocatalyst activation system as described above; however, the use of such a system is not essential. Specifically, in the case of activating the catalyst containing the photocatalytic material, it is sufficient if the light and the heat are supplied to the photocatalytic material, and a method and mean for supplying both of the light and the heat are not limited.

The description will be made below more in detail of the present invention by examples and comparative examples; however, the present invention is not limited to these examples.

### (Example 1)

Approximately 3 g of iron oxide (Fe₂O₃) was put onto a bottom portion of a quartz-made reaction tube with a hollow cylindrical shape and a capacity of approximately 200 ml, 20 vol% of oxygen/argon gas was supplied thereto, and a periphery of the reaction tube was heated at 400°C for one hour by a mantle heater, whereby pretreatment was performed.

Thereafter, the reaction tube was cooled down to predetermined reaction temperatures (300°C, 250°C, 200°C, 150°C, 100°C, 50°C). Moreover, with regard to gas supply flow rates to the reaction tube, by a mass flow controller, a flow rate of butane was controlled at 5 ml/min, a flow rate of oxygen was controlled at 35 ml/min, and a flow rate of argon was controlled at 60 ml/min.

Note that a 300W xenon lamp was used for the light source. Light applied from the xenon lamp was cooled by a water filter, and was condensed onto the photocatalyst through a condensing lens (made of BK7, f = 200 mm). An area of the applied light thus condensed had a diameter of approximately 10 mm.

Gas generated by the photocatalytic reaction was analyzed by gas chromatography (TCD). Note that measurement values on and after 30 minutes after the light irradiation, from when the photocatalytic activity was stabilized, were employed as data.

The above-described gasses were supplied at the above-described reaction temperatures, and thereafter, the generated gas was analyzed, and a conversion ratio from CO₂ to butane was calculated. Then, while the conversion ratio was 25% at 50°C, the conversion ratio was greatly increased to 40% at 100 to 300°C.

### (Example 2)

Similar operations to those of Example 1 were repeated except for changing the photocatalyst to cuprous oxide (Cu₂O). The butane conversion ratio was 30% at 50°C, and 45% at 100 to 300°C.

### (Example 3)

Similar operations to those of Example 1 were repeated except for changing the photocatalyst to cerium oxide (CeO₂). The butane conversion ratio was 25% at 50°C, and 33% at 100 to 300°C.

### (Example 4)

Similar operations to those of Example 1 were repeated except for changing the photocatalyst to vanadium oxide (V₂O₅). The butane conversion ratio was 25% at 50°C, and 33% at 100 to 300°C.

### (Example 5)

Similar operations to those of Example 1 were repeated except for changing the photocatalyst to bismuth oxide (Bi₂O). The butane conversion ratio was 6% at 50°C, and 8% at 100 to 300°C.

### (Example 6)

Similar operations to those of Example 1 were repeated except for adding 3% of platinum to iron oxide and reacting both thereof with each other at 300°C. The butane conversion ratio was 50% at 300°C.

### (Example 7)

Similar operations to those of Example 1 were repeated except for adding 1% of platinum to iron oxide and reacting both thereof with each other at 300°C. The butane conversion ratio was 48% at 300°C.

### (Comparative example 1)

Comparative example 1 was implemented under the same conditions as those in Example 1 except for setting the reaction temperature at 20°C. The butane conversion ratio was 5% at 50°C, and 7% at 100 to 300°C.

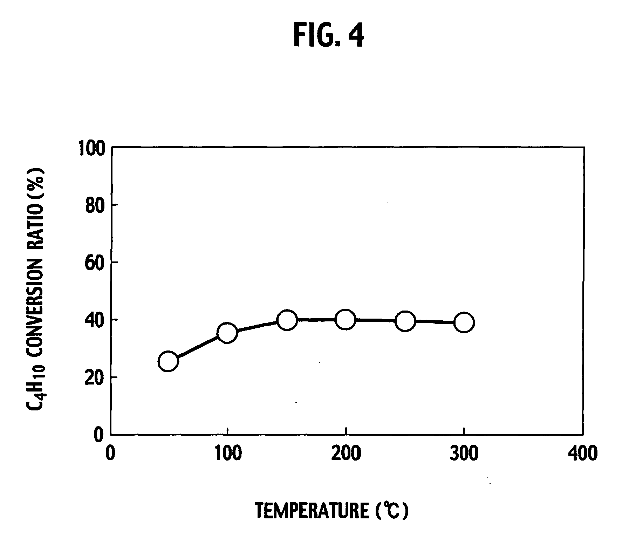

Results of Example 1 are shown in Table 1 and FIG. 4.

**[Table 1]**

| Catalyst temperature (°C) | Butane conversion ratio (%) |
|---|---|
| 50 | 25 |
| 100 | 35 |
| 150 | 39.5 |
| 200 | 39.5 |
| 250 | 39 |
| 300 | 38.5 |

From Table 1 and FIG 4, it is obvious that, in accordance with the photocatalyst activation systems of the respective examples incorporated in the present invention, the activities of the materials in which the photocatalytic activities have been conventionally regarded to be lower than the photocatalytic activity of titanium oxide are enhanced significantly. Band gaps of these photocatalytic materials are narrower than the band gap of titanium oxide, and accordingly, the visible light range is also usable. From these facts, it is understood that the photocatalyst activation systems of these examples have high practical utilities and are thereby promising.

Specifically, also from these examples, it is obvious that, in accordance with the present invention, the photocatalytic activity can be enhanced to a large extent, and such a usable absorption wavelength range can be widened.

### (Example 8)

A flat portion with a size of approximately 40×20 mm was provided in a part of a cylindrical reaction tube with an inner diameter of approximately 3 mm, which is made of Pyrex (registered trademark), in order to widen the area of the applied light. Onto this flat portion, 4.5 g of cerium oxide powder (mean particle diameter (D50): approximately 0.5 µm) was filled as the photocatalytic material, 20% O₂/Ar was supplied thereto, and heating was performed therefor at 400°C for one hour, whereby pretreatment was performed. Note that the heating was performed in such a manner that a periphery of the reaction tube was surrounded by a ceramic heater of an open/close type, and a portion to be irradiated with the light is partially ensured.

Thereafter, the reaction tube was cooled down to predetermined reaction temperatures (250°C, 200°C, 150°C, 100°C). Moreover, for the gas to be supplied to the reaction tube, 15% C₄H₁₀, 17% O₂, 58% Ar, and 10% N₂ were used. Furthermore, a flow rate of the gas to the reaction tube was controlled to be 200 ml/min by using the mass flow controller.

The 300W xenon lamp was used for the light source. The light applied therefrom was cooled by the water filter, and was condensed onto the photocatalyst through the condensing lens (made of BK7, f = 200 mm). An area of the applied light thus condensed had a diameter of approximately 10 mm.

Gas generated by the photocatalyst was analyzed by the gas chromatography (TDC). Measurements were performed on and after 30 minutes after the light irradiation, from when the photocatalytic activity was stabilized. Results were written as CO₂ generation rates (µmol/min) on Table 2.

### (Example 9)

Similar operations to those of Example 8 were repeated except for changing the photocatalytic material to 4.6 g of cerium oxide (mean particle diameter: approximately 8 µm), and an activation method of this example was attempted.

### (Example 10)

Similar operations to those of Example 8 were repeated except for changing the photocatalytic material to 1.3 g of titanium oxide, and an activation method of this example was attempted.

### (Example 11)

Similar operations to those of Example 8 were repeated except for changing the photocatalytic material to 2.6 g of iron oxide, and an activation method of this example was attempted.

### (Example 12)

Similar operations to those of Example 8 were repeated except for changing the photocatalytic material to 2.3 g of vanadium oxide, and an activation method of this example was attempted.

### (Example 13)

Similar operations to those of Example 8 were repeated except for changing the photocatalytic material to 3.5 g of a mixture of iron oxide and cerium oxide, and an activation method of this example was attempted. Note that the mixture of iron oxide and cerium oxide was prepared in such a manner that nitrates of these were mixed so as to be in a molar ratio of: Fe/Ce = 0.8/0.2, and were dissolved into 500 ml of water, then 28% of ammonia water was dropped thereinto so as obtain pH equal to 8, and an obtained liquid was stirred for 16 hours, was cleaned and filtered, and was thereafter fired at 400°C for five hours. Note that, as a result of measuring ultraviolet/visible light absorption spectra, a band gap of the photocatalytic material was able to be estimated at 760 nm, and it was also understood that the photocatalytic material was cable of absorbing the visible light.

### (Example 14)

Similar operations to those of Example 13 were performed except for mixing the respective nitrates in the mixture of iron oxide and cerium oxide so as to be in the molar ratio of: Fe/Ce = 0.2/0.8.

### (Comparative example 2)

Similar operations to those of Example 8 were performed except for not performing the light irradiation, and an activation method of this example was attempted.

### (Comparative example 3)

Similar operations to those of Example 9 were performed except for not performing the light irradiation, and an activation method of this example was attempted.

### (Comparative example 4)

Similar operations to those of Example 10 were performed except for not performing the light irradiation.

### (Comparative example 5)

Similar operations to those of Example 11 were performed except for not performing the light irradiation.

### (Comparative example 6)

Similar operations to those of Example 12 were performed except for not performing the light irradiation.

### (Comparative example 7)

Similar operations to those of Example 13 were performed except for not performing the light irradiation.

### (Comparative example 8)

Similar operations to those of Example 14 were performed except for not performing the light irradiation.

Results of Examples 8 to 14 and Comparative examples 2 to 8 are shown in Table 2. Note that "not measured" in Table 2 refers to that the measurement was discontinued in consideration for safety since the surface of the catalyst become red hot.

**[Table 2]**

| | Catalyst | Reaction temperature | | | |
|---|---|---|---|---|---|
| | | 100°C | 150°C | 200°C | 250°C |
| Example 8 | CeO₂ (mean particle diameter: approximately 0.5 µm) | 4.5 | 7.4 | Not measured | Not measured |
| Example 9 | CeO₂ (mean particle diameter: approximately 2.3 µm) | 0 | 0.8 | 4.3 | 21.6 |
| Example 10 | TiO₂ | 0 | 4 | 7.5 | 20.5 |
| Example 11 | Fe₂O₃ | 0 | 0 | 2.5 | 17 |
| Example 12 | V₂O₅ | 0 | 0 | 2 | 8.6 |
| Example 13 | Fe_{0.8}Ce_{0.2}Ox | 6 | 10 | Not measured | Not measured |
| Example 14 | Fe_{0.2}Ce_{0.8}Ox | 5 | 8.1 | Not measured | Not measured |
| Comparative example 2 | CeO₂ (mean particle diameter: approximately 0.5 µm) | 0 | 4 | 6.5 | 13.5 |
| Comparative example 3 | CeO₂ (mean particle diameter: approximately 2.3 µm) | 0 | 0.5 | 1.6 | 10.7 |
| Comparative example 4 | TiO₂ | 0 | 0 | 1 | 10 |
| Comparative example 5 | Fe₂O₃ | 0 | 0 | 0 | 5 |
| Comparative example 6 | V₂O₅ | 0 | 0 | 0.8 | 5.2 |
| Comparative example 7 | Fe_{0.8}Ce_{0.2}Oₓ | 0 | 1.5 | 3 | 6 |
| Comparative example 8 | Fe_{0.2}Ce_{0.8}Oₓ | 0 | 1.2 | 2.8 | 5 |

From Table 2, it is understood that cerium oxide is effective as the photocatalytic material in accordance with the activation method using the photocatalyst activation system, which is incorporated in the present invention. In particular, nanoparticulate cerium oxide with a small particle diameter and FeCeOₓ formed by mixing cerium oxide with iron oxide capable of responding to the visible light are promising. Specifically, from the above-described examples, it is obvious that the use of the photocatalytic material containing cerium oxide makes it possible to enhance the photocatalytic activity to a large extent and to respond to the visible light. Moreover, in accordance with the above-described examples, the use of the photocatalytic material containing the transition metal oxide other than cerium oxide also makes it possible to enhance the photocatalytic activity to a larger extent and to respond to the visible light.

Note that cerium oxide or the transition metal oxide other than cerium oxide may be used singly as the photocatalytic material for use in the photocatalyst activation system of the present invention; however, cerium oxide and the transition metal oxide other than cerium oxide may be mixed and used. Also in this case, the photocatalytic activity can be enhanced to a large extent, and the usable absorption wavelength range can be widened.

The entire contents of Japanese Patent Applications No. 2006-54573 (filed on: May 1, 2006) and No. 2007-37614 (filed on: February 19, 2007) are incorporated herein by reference.

The description has been made above of the contents of the present invention along the embodiments and the examples; however, the present invention is not limited to the description of these, and for those skilled in the art, it is self-evident that a variety of modifications and improvements are possible.

### INDUSTRIAL APPLICABILITY

In accordance with the present invention, the configuration is adopted, in which the photocatalytic reaction is performed under the heating conditions. Accordingly, there can be provided the photocatalyst activation system and the method for activating a photocatalyst, which have the high practical utilities, are capable of widening the usable wavelength range of light, and are capable of enhancing the catalytic activity to a large extent.

## Claims

1. A photocatalyst activation system, comprising:
a catalyst which comprises a photocatalytic material containing cerium oxide;
a light source which irradiates the catalyst with light; and
a heat transfer device which transfers heat to the catalyst.

2. A photocatalyst activation system, comprising:
a catalyst which comprises a photocatalytic material containing at least one oxide selected from the group consisting of transition metal oxides other than cerium oxide;
a light source which irradiates the catalyst with light; and
a heat transfer device which transfers heat to the catalyst.

3. The photocatalyst activation system according to claim 2, wherein the transition metal oxides are at least one oxide selected from the group consisting of iron oxide, copper oxide, vanadium oxide, bismuth oxide and titanium oxide.

4. The photocatalyst activation system according to any one of claims 1 to 3, wherein the photocatalytic material comprises at least either one of transition metal sulfide and transition metal nitride.

5. The photocatalyst activation system according to any one of claims 1 to 4, wherein the photocatalyst comprises at least one promoter selected from the group consisting of platinum, rhodium, palladium ruthenium, silver, gold, nickel, cobalt, copper and iridium.

6. The photocatalyst activation system according to any one of claims 1 to 5, wherein the light applied from the light source has a wavelength equal to or more than energy corresponding to a band gap of the photocatalytic material.

7. The photocatalyst activation system according to any one of claims 1 to 6, wherein the light applied from the light source is visible light.

8. The photocatalyst activation system according to any one of claims 1 to 7, wherein the heat transfer device is a heater.

9. The photocatalyst activation system according to any one of claims 1 to 8, wherein the heat transfer device is a light condenser of the light applied from the light source.

10. The photocatalyst activation system according to any one of claims 1 to 9, wherein the heat transfer device has exhaust heat from other engine and/or device.

11. The photocatalyst activation system according to any one of claims 1 to 10, wherein the light applied from the light source is an infrared ray, and the catalyst is heated by the infrared ray.

12. A method for activating a photocatalyst, comprising:
supplying light and heat to a photocatalyst which comprises a photocatalytic material containing cerium oxide.
